# EUROPÄISCHE PATENTANMELDUNG

(11) **EP 3 851 424 A1**
(43) Veröffentlichungstag der Anmeldung: **21.07.2021**
(21) Anmeldenummer: 20151570.7
(22) Anmeldetag: 14.01.2020
(51) Int. Cl.: C04B 26/06, C04B 28/06

(54) **VERWENDUNG VON REAKTIONSHARZMISCHUNGEN MIT VORDEFINIERTER POLARITÄT ZUR EINSTELLUNG DER GELZEIT EINER MÖRTELMASSE SOWIE VERFAHREN ZUR EINSTELLUNG DER GELZEIT EINER MÖRTELMASSE**

(71) Anmelder: Hilti Aktiengesellschaft, 9494 Schaan (LI)
(72) Erfinder: Kumru, Memet-Emin, 86199 Augsburg (DE)
(74) Vertreter: Hilti Aktiengesellschaft Corporate Intellectual Property

(57) **Zusammenfassung**

Gegenstand der vorliegenden Erfindung ist die Verwendung einer Reaktionsharzmischung mit einer vordefinierten Polarität zur Einstellung der Gelzeit einer Mörtelmassen auf Basis von radikalisch polymerisierbaren Verbindungen, insbesondere auf Basis von Urethan(meth)acrylaten, ein entsprechendes Verfahren zur Einstellung der Gelzeit sowie eine Mörtelmasse auf Basis von radikalisch polymerisierbaren Verbindungen umfassend eine Reaktionsharzmischung mit einer vordefinierten Polarität.

## Beschreibung

Gegenstand der vorliegenden Erfindung ist die Verwendung einer Reaktionsharzmischung mit einer vordefinierten Polarität zur Einstellung der Gelzeit einer Mörtelmassen auf Basis von radikalisch polymerisierbaren Verbindungen, insbesondere auf Basis von Urethan(meth)acrylaten, ein entsprechendes Verfahren zur Einstellung der Gelzeit sowie eine Mörtelmasse auf Basis von radikalisch polymerisierbaren Verbindungen umfassend eine Reaktionsharzmischung mit einer vordefinierten Polarität.

Die Verwendung von Reaktionsharzen auf Basis radikalisch polymerisierbarer Verbindungen ist in den unterschiedlichsten Bereichen, unter anderem im Baubereich, seit langem bekannt. Im Bereich der Befestigungstechnik hat sich die Verwendung von Reaktionsharzen als organisches Bindemittel, durchgesetzt. Es handelt sich dabei insbesondere um deren Verwendung als Reaktionsharzmörtel in Zweikomponentensystemen für Dübelanwendungen (chemischer Dübel), wobei der Reaktionsharzmörtel (A Komponente), die Reaktionsharze auf Basis radikalisch polymerisierbarer Verbindungen enthält, und der Härter (B Komponente), das Härtungsmittel enthält. Andere, übliche Bestandteile wie anorganische Zuschlagstoffe oder Farbstoffe können in der einen und/oder der anderen Komponente enthalten sein. Durch Vermischen der beiden Komponenten wird dann durch Radikalbildung die Reaktion in Gang gebracht und das organische Bindemittel gehärtet.

Die unterschiedlichen Anwendungsgebiete eines chemischen Dübels auf der Baustelle erfordern es u.a., dass die Härtungsreaktion an unterschiedliche Bedingungen angepasst werden kann, in dem die Gelzeit, auch Topfzeit genannt, verkürzt oder verlängert wird. Die Gelzeit beschreibt die Zeit, in der die Mischung nach dem Vermischen der Harzkomponente mit der Härterkomponente noch verarbeitbar bleibt, damit die Mischung beispielsweise in ein Bohrloch eingebracht und ein Befestigungsmittel eingeführt werden kann, bevor diese beginnt auszuhärten (zu polymerisieren). Dies wird üblicherweise über die Zugabe von Verbindungen erreicht, die in der Lage sind, die beim Vermischen der beiden Komponenten entstehenden freien Radikale abzufangen, die sogenannten Stabilisatoren oder Inhibitoren.

So beschreibt die EP 2 532 636 A1 die Verwendung eines 3-Pyridinol- oder 5-Pyrimidinol-Derivates zur Einstellung der Reaktivität und der Gelzeit von Mörtelmassen auf Kunstharzbasis. In der EP 2 532 632 A2 wird die Verwendung einer Inhibitorkombination, insbesondere eines 5-Pyrimidinol-Derivates, in Kombination mit einem sterisch gehinderten Phenolderivat zur Einstellung der Reaktivität und der Gelzeit von Mörtelmassen auf Kunstharzbasis beschrieben.

Auch wenn durch die Verwendung von ausgewählten Inhibitoren bzw. Inhibitorkombinationen eine Anpassung der Gelzeit möglich ist, hat es sich als problematisch herausgestellt, dass sich die Gelzeit nicht beliebig durch die Zugabe von Inhibitoren steuern lässt, insbesondere lässt sich die Gelzeit einer Mörtelmasse nicht beliebig verlängern. Zur Verlängerung der Gelzeit werden große Menge an Inhibitoren benötigt, die beim Überschreiten einer kritischen Konzentration dazu führen, dass der Mörtelmasse nicht vollständig oder gar nicht aushärtet. Es gibt allerdings Anwendungsgebiete, wie beispielswiese den nachträglichen Bewehrungsanschluss (Rebar-Anwendung), bei denen lange Gelzeiten benötigt werden.

Die der vorliegenden Erfindung zugrunde liegende Aufgabe besteht somit darin, eine Lösung bereitzustellen, mit der die Gelzeit einer Mörtelmasse auf Basis von radikalisch polymerisierbaren Verbindungen, insbesondere auf Basis von Urethan(meth)acrylaten, bei konstantem Inhibitorgehalt in einem breiten zeitlichen Rahmen gesteuert und eingestellt werden kann, ohne die sonstigen Eigenschaften der Mörtelmasse und des aus der Mörtelmasse hergestellten chemischen Dübels negativ zu beeinflussen.

Es hat sich überraschenderweise gezeigt, dass die Polarität der in der Mörtelmasse enthaltenden Reaktionsharzmischung einen großen Einfluss auf die Gelzeit hat. Somit ist über eine Einstellung der Polarität der Reaktionsharzmischung eine Steuerung der Gelzeit einer Mörtelmasse auf Basis von radikalisch polymerisierbaren Verbindungen bei konstantem Inhibitorgehalt möglich ist.

Gegenstand der vorliegenden Erfindung ist daher die Verwendung einer Reaktionsharzmischung mit einer vordefinierten Polarität zur Einstellung der Gelzeit eine Mörtelmasse auf Basis von radikalisch polymerisierbaren Verbindungen gemäß Anspruch 1.

Ein weiterer Gegenstand der vorliegenden Erfindung ist die Verwendung eines Reaktionsharzes umfassend mindestens eine radikalisch polymerisierbare Verbindung in Kombination mit einem oder mehreren Reaktivverdünnern zur Einstellung einer vordefinierten Polarität einer Reaktionsharzmischung.

Ein weiterer Gegenstand der vorliegenden Erfindung ist eine Reaktionsharzmischung mit einer vordefinierten Polarität zur Verwendung in einer Mörtelmasse auf Basis von radikalisch polymerisierbaren Verbindungen für die chemische Befestigung von Konstruktionselementen.

Ein Gegenstand der vorliegenden Erfindung ist auch ein Verfahren zur Einstellung der Gelzeit einer Mörtelmasse auf Basis von radikalisch polymerisierbaren Verbindungen.

Zum besseren Verständnis der Erfindung werden die folgenden Erläuterungen der hierin verwendeten Terminologie als sinnvoll erachtet. Im Sinne der Erfindung bedeuten:
- "Reaktionsharzmischung" eine Mischung aus mindestens einem Reaktionsharz und mindestens einem Reaktivverdünner;
- "Reaktionsharz auf Basis einer radikalisch polymerisierbaren Verbindung", kurz auch "Reaktionsharz" oder "Basisharz" genannt, eine üblicherweise feste oder hochviskose "radikalisch härtbare", d.h. radikalisch polymerisierbare ungesättigte Verbindung, welche durch Polymerisation härtet und eine Harzmatrix bildet;
- "Reaktivverdünner" flüssige oder niedrigviskose Monomere und Oligomere, die eine oder mehrere zur Reaktion mit dem Reaktionsharz befähigte funktionelle Gruppen enthalten und bei der Polymerisation (Härtung) zum überwiegenden Teil Bestandteil der gehärteten Masse (Harzmatrix) werden;
- "Inhibitor" eine zur Inhibierung der Polymerisationsreaktion (Härtung) fähige Verbindung, die dazu dient, die Polymerisationsreaktion und damit ein unerwünschtes vorzeitiges Polymerisieren des Reaktionsharzes während der Lagerung zu vermeiden (in dieser Funktion oftmals auch als Stabilisator bezeichnet) und/oder den Start der Polymerisationsreaktion unmittelbar nach der Zugabe des Härtungsmittels zu verzögern; welche Aufgabe der Inhibitor hat, hängt davon ab, in welchen Mengen er eingesetzt wird;
- "Härtungsmittel" Stoffe, welche die Polymerisation (das Härten) der radikalisch härtbaren ungesättigten Verbindung, insbesondere des Reaktionsharzes, bewirken bzw. initiieren;
- "Beschleuniger" eine zur Beschleunigung der Polymerisationsreaktion (Härtung) fähige Verbindung, die dazu dient, die Bildung von Radikalen, insbesondere aus dem Härtungsmittel, zu beschleunigen;
- Harzkomponente (A-Komponente) die Mischung aus der Reaktionsharzmischung mit ggf. mindestens einem Beschleuniger und/oder mindestens einem Inhibitor und/oder weiteren Additive;
- "Härterkomponente" eine Mischung aus dem Härtungsmittel und anorganischen und/oder organischen Zuschlagstoffen (Füllstoffe und/oder Additive), wie etwa ein Phlegmatisierungsmittel, d.h. Stabilisierungsmittel für das Härtungsmittel;
- "Füllstoff" eine organische oder anorganische, insbesondere anorganische Verbindung;
- "Mörtelmasse" bezeichnet die Formulierung, die durch Mischen der Reaktionsharzmischung mit der Härterkomponente, der das Härtungsmittel enthält, erhalten wird, und als solches direkt zur chemischen Befestigung verwendet werden kann;
- "zweikomponentiges Reaktionsharzsystem" ein Reaktionsharzsystem, das zwei voneinander getrennt gelagerte Komponenten, im Allgemeinen eine Harzkomponente und eine Härterkomponente, umfasst, so dass eine Härtung des Reaktionsharzes erst nach dem Mischen der beiden Komponenten erfolgt;
- "mehrkomponentiges Reaktionsharzsystem" ein Reaktionsharzsystem, das mehrere voneinander getrennt gelagerte Komponenten umfasst, so dass eine Härtung des Reaktionsharzes erst nach dem Mischen aller Komponenten erfolgt;
- "(Meth)acryl.../...(meth)acryl...", dass sowohl die "Methacryl.../...methacryl..."-als auch die "Acryl.../...acryl..."-Verbindungen umfasst sein sollen; bevorzugt sind in der vorliegenden Erfindung "Methacryl.../...methacryl..." -Verbindungen;
- "ein", "eine", "einer" als Artikel vor einer chemischen Verbindungsklasse, z.B. vor dem Wort "Reaktivverdünner", dass eine oder mehrere unter diese chemische Verbindungsklasse fallende Verbindungen, z.B. verschiedene "Reaktivverdünner", gemeint sein können;
- "mindestens ein", "mindestens eine", "mindestens einer" zahlenmäßig "ein oder mehrere"; in einer bevorzugten Ausführungsform ist mit diesem Begriff zahlenmäßig "ein", "eine", "einer" gemeint;
- "enthalten", "umfassen" und "beinhalten", dass neben den genannten Bestandteilen noch weitere vorhanden sein können; diese Begriffe sind einschließlich gemeint und umfassen daher auch "bestehen aus"; "bestehen aus" ist abschließend gemeint und bedeutet, dass keine weiteren Bestandteile vorhanden sein können; in einer bevorzugten Ausführungsform bedeuten die Begriffe "enthalten", "umfassen" und "beinhalten" den Begriff "bestehen aus";

Alle in diesem Text genannten Normen (z.B. DIN-Normen) wurden in der zum Anmeldetag dieser Anmeldung aktuellen Ausgabe verwendet.

Es hat sich gezeigt, dass die Polarität der Reaktionsharzmischung einen signifikanten Einfluss auf die Gelzeit einer Mörtelmasse hat und somit über die Einstellung einer vordefinierten Polarität der Reaktionsharzmischung die Gelzeit einer Mörtelmasse gezielt gesteuert werden kann.

Die Reaktionsharzmischung stellt einen wesentlichen Teil der Harzkomponente (A-Komponente) dar und wird durch Mischung des Reaktionsharzes mit einem oder mehreren Reaktivverdünnern erhalten. Über die Auswahl und die Menge des/der Reaktivverdünner in Kombination mit der Auswahl des Reaktionsharzes wird die Polarität der resultierenden Reaktionsharzmischung eingestellt.

Geeignete radikalisch polymerisierbare Verbindungen als Reaktionsharz sind ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Besonders bevorzugt ist die radikalisch polymerisierbare Verbindung, das Reaktionsharz, eine Verbindung auf Urethan(meth)acrylatbasis, Epoxy(meth)acrylatbasis, ein (Meth)acrylat eines alkoxylierten Bisphenols oder eine Verbindung auf Basis weiterer ethylenisch ungesättigter Verbindungen.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1, WO 02/051903 A1 und WO 10/108939 A1 beschrieben sind. Vinylesterharze (synonym: (Meth)acrylatharze) sind dabei aufgrund ihrer hydrolytischen Beständigkeit und ausgezeichneten mechanischen Eigenschaften am stärksten bevorzugt. Ganz besonders bevorzugt sind Vinylesterurethanharze, insbesondere Urethanmethacrylate.

Beispiele geeigneter ungesättiger Polyester werden in folgende Kategorien eingeteilt, wie sie durch M. Malik et al. in J. M. S. - Rev. Macromol. Chem. Phys., C40(2 and 3), p.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diesen Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion einer Dicarbonsäure, z.B. Maleinsäure, mit Dicyclopentadienyl, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere, Präpolymere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigte Gruppen aufweisen, werden zum Beispiel durch Umsetzung von Epoxid-Oligomeren oder -Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomers oder -Polymers mit Methacrylsäure oder Methacrylamid, bevorzugt mit Methacrylsäure, und gegebenfalls mit einem Kettenverlängerer, wie etwa Diethylenglykol oder Dipropylenglykol, erhalten werden. Beispiele solcher Verbindungen sind aus den Anmeldungen US 3297745 A, US 3772404 A, US 4618658 A, GB 2217722 A1, DE 3744390 A1 und DE 4131457 A1 bekannt.

Als Vinylesterharz besonders geeignet und bevorzugt sind (Meth)acrylat-funktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden. Ganz besonders geeignet und bevorzugt sind die in der DE 102011017 626 B4 beschriebenen Urethanmethacrylatharze (die auch als Vinylesterurethanharze bezeichnet werden).

Als Isocyanate können aliphatische (cyclische oder lineare) und/oder aromatische di-oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di-oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist.

Als Acrylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, und Neopentylglykol-mono(meth)acrylat geeignet. Bevorzugt sind Acryl- bzw. Methacrylsäurehydroxyalkylester, wie Hydroxyethyl(meth)acrylat, Hydroxypropyl(meth)acrylat, Polyoxyethylen(meth)acrylat, Polyoxypropylen(meth)acrylat, zumal solche Verbindungen der sterischen Hinderung der Verseifungsreaktion dienen. Acrylsäure ist wegen ihrer geringeren Alkalistabilität weniger bevorzugt als am Kohlenwasserstoffrest substituierte Acrylsäuren.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglykol, Propandiol, Dipropylenglykol, andere Diole, wie 1,4-Butandiol, 1,6-Hexandiol, Neopentylglykol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

All diese Reaktionsharze, die erfindungsgemäß als radikalisch polymerisierbare Verbindungen verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Reaktionsharz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind.

Zur Herstellung der Reaktionsharzmischung und zur Einstellung einer vordefinierten Polarität der Reaktionsharzmischung wird das Reaktionsharz mit mindestens einer weiteren niederviskosen, radikalisch polymerisierbaren, ethylenisch ungesättigte Verbindung als Reaktivverdünner vermischt.

Der Ausdruck einer "Reaktionsharzmischung mit einer vordefinierten Polarität" bedeutet im Rahmen der vorliegenden Erfindung, dass in Abhängig der gewünschten Gelzeit der Mörtelmasse eine Reaktionsharzmischung aus einem Reaktionsharz und mindestens einem Reaktivverdünner hergestellt wird. Die Auswahl des Reaktivverdünners bzw. einer Mischung von zwei oder mehr Reaktivverdünnern erfolgt in Abhängigkeit von der Polarität des Reaktionsharzes, so dass durch Abstimmung eines oder mehrerer Reaktivverdünner mit dem Reaktionsharz eine vordefinierte Polarität der Reaktionsharzmischung eingestellt werden kann. In erster Linie bestimmen die gewünschten Eigenschaften des chemischen Dübels, welcher aus der Mörtelmasse umfassend die Reaktionsharzmischung, hergestellt wird die Auswahl des Reaktionsharzes. Die beansprauchte Erfindung ermöglicht es auch bei einer limitierten Variabilität des Reaktionsharzes die Eigenschaften der Mörtelmasse, insbesondere die Gelzeit, in einem breiten Zeitfenster einstellen zu können.

Die Oberflächenspannung einer Verbindung oder einer Mischung von Verbindungen setzt sich zusammen aus einem dispersiven und einem polaren Anteil. Als Maß für die Polarität der Reaktionsharzmischung und auch für die Reaktivverdünner gilt im Rahmen der vorliegenden Erfindung der polare Anteil der Oberflächenspannung, welcher mit Hilfe einer Kontaktwinkelmessung (Tropfenkonturanalyse-system G10/DSA10 von Fa. KRÜSS) an einer unpolaren Referenzoberfläche (Teflon) bestimmt wird. Die Kontaktwinkelmessung wird üblicherweise bei 25 °C durchgeführt. Bei der Messung müssen die folgenden Kriterien erfüllt sein: a) Die Oberflächenspannung des Festkörpers ist bekannt und völlig unpolar (Teflon (20mN/m und polare Anteil= 0)); b) Die Gesamt-Oberflächenspannung der Reaktionsharzmischung ist bekannt. Diese wird mittels Pendant-Drop-Method (Tropfenkonturanalyse-system G10/DSA10 von Fa. KRÜSS) bestimmt; c) Es erfolgt die Bestimmung des fortschreitenden Kontaktwinkels zwischen der Reaktionsharzmischung und der Referenzoberfläche (Tropfenkonturanalyse-system G10/DSA10 von Fa. KRÜSS).

Im Rahmen der vorliegenden Erfindung gilt eine Reaktionsharzmischung oder ein Reaktivverdüner als polar, wenn der polare Anteil der Oberflächenspannung der Reaktionsharzmischung ≥ 7mN/m ist. Der polare Anteil der Oberflächenspannung ist über den Wert der Oberflächenspannung nach oben begrenzt.

Es gilt generell, je höher der polare Anteil der Oberflächenspannung der Reaktionsharzmischung desto kürzer die Gelzeit der die polare Reaktionsharzmischung umfassende Mörtelmasse. In anderen Worten bedeutet dies, dass bei konstantem Inhibitorgehalt eine Mörtelmasse mit einer höher polaren Reaktionsharzmischung (bspw. 12 mN/m) eine kürze Gelzeit aufweist als eine Mörtelmasse mit einer vergleichsweise geringer polaren Reaktionsharzmischung (bspw. 9 mN/m).

Im Rahmen der vorliegenden Erfindung gilt eine Reaktionsharzmischung als unpolar, wenn der polare Anteil der Oberflächenspannung der Reaktionsharzmischung < 7mN/m ist, insbesondere 0 mN/m bis < 7mN/m. Hierbei gilt generell, je unpolarer die Reaktionsharzmischung desto länger die Gelzeit der die unpolare Reaktionsharzmischung umfassende Mörtelmasse. In anderen Worten bedeutet dies, dass bei konstantem Inhibitorgehalt eine Mörtelmasse mit einer unpolareren Reaktionsharzmischung (bspw. 1 mN/m) eine längere Gelzeit aufweist als eine Mörtelmasse mit einer vergleichsweise weniger unpolaren Reaktionsharzmischung (bspw. 3 mN/m).

Die Wahl des Reaktivverdünners bzw. die Wahl der Mischung von zwei oder mehr Reaktivverdünnern wird von einem Fachmann in Abhängigkeit des Reaktionsharzes und der einzustellenden Polarität der Reaktionsmischung getroffen. Soll beispielsweise die Gelzeit einer Mörtelmasse enthaltend ein eher polares Reaktionsharz verlängert werden, wird zur Herstellung der Reaktionsharzmischung ein unpolarer Reaktivverdüner bzw. eine ingesamt unpolare Mischung von zwei oder mehr Reaktivverdünnern verwendet.

Prinzipiell können als Reaktiververdünner zur Herstellung der Reaktionsharzmischung alle niederviskosen, radikalisch polymerisierbaren, ethylenisch ungesättigten Verbindungen eingesetzt werden, insbesondere solche, die in den Anmeldungen EP 1935860 A1 und DE 19531649 A1 beschrieben sind. Vorzugsweise enthält die Reaktionsharzmischung als Reaktivverdünner einen (Meth)acrylsäureester, wobei besonders bevorzugt (Meth)acrylsäureester ausgewählt werden aus der Gruppe bestehend aus Hydroxypropyl(meth)acrylat, Propandiol-1,3-di(meth)acrylat, Butandiol-1,2-di(meth)acrylat, Trimethylolpropantri(meth)acrylat, 2-Ethylhexyl(meth)acrylat, Phenylethyl-(meth)acrylat, Tetrahydrofurfuryl(meth)acrylat, Ethyltriglykol(meth)acrylat, N,N-Dimethylaminoethyl(meth)acrylat, N,N-Dimethylaminomethyl(meth)acrylat, Butandiol-1,4-di(meth)acrylat, Butandiol-1,3-di(meth)acrylat, Hexandiol-1,6-di(meth)acrylat, Acetoacetoxyethyl(meth)acrylat, Ethandiol-1,2-di(meth)acrylat, Isobornyl(meth)acrylat, Di-, Tri- oder Oligo-ethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1.0.^{2.6}-decan, 3-(Meth)cyclopentadienyl(meth)acrylat, Isobornyl(meth)acrylat und Decalyl-2-(meth)acrylat. Biogene Reaktivverdünner wie Tetrahydrofurfuryl(meth)acrylat, Isobornyl(meth)acrylat oder Isosorbiddi(meth)acrylat sind bevorzugt.

Grundsätzlich können auch andere übliche radikalisch polymerisierbaren Verbindungen, allein oder im Gemisch mit den im vorhergehenden Absatz beschriebenen (Meth)acrylsäureestern, eingesetzt werden, z.B. Styrol, α-Methylstyrol, alkylierte Styrole, wie tert-Butylstyrol, Divinylbenzol und Vinyl- sowie Allylverbindungen. Beispiele für derartige Vinyl- oder Allylverbindungen sind Hydroxybutylvinylether, Ethylenglykoldivinylether, 1,4-Butandioldivinylether, Trimethylolpropandivinylether, Trimethylolpropantrivinylether, Mono-, Di-, Tri-, Tetra- und Polyalkylenglykolvinylether, Mono-, Di-, Tri-, Tetra- und Polyalkylenglykolallylether, Adipinsäuredivinylester, Trimethylolpropandiallylether und Trimethylolpropantriallylether.

Zur Herstellung einer polaren Reaktionsharzmischung oder zur Erhöhung der Polarität einer Reaktionsharzmischung werden bevorzugt Reaktivverdünner verwendet, die sich durch ein permanentes elektrisches Dipolmoment auszeichnen. Die Größe des permanenten elektrischen Dipolmoments stellt dabei einen Richtwert für die Polarität des Reaktivverdünners dar. Bevorzugt weisen entsprechende Reaktivverdünner mindestens eine funktionelle Gruppe auf, wobei die funktionelle bevozugt ausgwählt ist aus der Gruppe der Alkohole,der Thiole, der Amine, der Carbonsäureester und der Halogenide.

Bevorzugt werden die Reaktivverdünner zur Herstellung einer polaren Reaktionsharzmischung ausgewählt aus der Gruppe bestehend aus Polyethylen Glycol 200 Dimethacrylat (PEG200DMA), Tricyclodecandioldimethacrylat (TCDDMA), Hydroxypropylmethacrylat (HPMA), 4-Hydroxybutylmethacrylat (4-HBMA), Triethylengylcoldimethacrylat (TRGDMA), Polyethylenglycol (2)-Hydroxyethylmethacrylat (PEG2HEMA), Bisphenol A ethoxyliertes dimethacrylat (E10BADMA), Hydroxyethylmethacrylat (HEMA), Glycerinmonomethacrylat (GMMA) und Methacrylatoyloxyethylphosphat (MAOP).

Zur Herstellung einer unpolaren Reaktionsharzmischung oder zur Erniedrigung der Polarität einer Reaktionsharzmischung werden bevorzugt Reaktivverdünner verwendet, die kein oder ein geringes permanentes Dipolemoment aufweisen. Bevorzugt weisen entsprechende Reaktivverdünner eine lange Alkylkette ohne funktionelle Gruppen auf. Bevorzugt ist die lange Alkylkette ein verzweigter, unverzweigter oder zyklischer Alkylrest mit 3 bis 20 Kohlenstoffatomen.

Bevorzugt werden die Reaktivverdünner zur Herstellung einer unpolaren Reaktionsharzmischung ausgewählt aus der Gruppe bestehend aus Ethylmethacrylat (EMA), 3,3,5-Trimethylcyclohexyl methacrylate (TMCHMA), Isobornyl Methacrylate (IBOMA), Isobutyl methacrylat (i-BMA), Tetrahydrofurfuryl methacrylat (THFMA), 2-Ethylhexylmethacrylat (2-HEMA), Cyclohexylmethacrylat (c-HMA), Allylmethacrylat (AMA), Benzylmethacrylat (BNMA), Isodecylmethacrylat (IDMA), 1,12-Dodecandioldimethacrylat (1,12-DDDDMA), 1,6-Hexandiol-dimethacrylat (1,6-HDDMA), 1,4-Butandioldimethacrylat (1,4-BDDMA), 1,3- Butandioldimethacrylat (1,3-BDDMA), Ethylengylcoldimethacrylat (EGDMA) und Glyceroldimethacrlyat.

Die Reaktiwerdünner können sowohl einzeln als auch in Mischung von zwei oder mehr Reaktivverdünnern verwendet werden. Zur optimalen Einstellung der vordefinierten Polarität der Reaktionsharzmischung ist es bevorzugt, dass eine Mischung von polaren und unpolaren Reaktivverdünnern zum Einsatz kommt.

Der Reaktivverdünner kann in einer Menge von 90 bis 10 Gew.-%, bevorzugt 80 bis 20 Gew.-%, besonders bevorzugt 70 bis 30 Gew.-%, bezogen auf die Harzkomponente (A), in der Reaktionsharzmischung enthalten sein.

Bevorzugt liegt die Gelzeit der Mörtelmasse in einem zeitlichen Rahmen von 2 bis 20 Minuten. Bei der Verwendung einer polaren Reaktionsharzmischung in der Harzkomponente beträgt die Gelzeit bevorzugt 2 bis 8 Minuten. Bei der Verwendung einer unpolaren Reaktionsharzmischung in der Harzkomponente beträgt die Gelzeit bevorzugt 9 bis 20 Minuten.

Zweckmäßig enthält die Harzkomponente des Weiteren mindestens einen Beschleuniger. Hierdurch wird die Härtungsreaktion der Reaktionsharzmischung mit dem Härtungsmittel beschleunigt. Geeignete Beschleuniger sind dem Fachmann bekannt. Diese sind zweckmäßig Amine.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl(2-chloroethyl)amin, 2-Ethylhexylamin, Bis(2-chloroethyl)amin, 2-Ethylhexylamin, Bis(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis(2-hydroxyethyl)oleylamin, Tris-[2-(2-hydroxy-ethoxy)-ethyl]amin, 3-Amino-1-propanol, Methyl(3-aminopropyl)ether, Ethyl-(3-aminopropyl)ether, 1,4-Butandiol-bis(3-aminopropyl)ether, 3-Dimethylamino-1-propanol, 1-Amino-2-propanol, 1-Diethylamino-2-propanol, Diisopropanolamin, Methyl-bis(2-hydroxypropyl)amin, Tris(2-hydroxypropyl)amin, 4-Amino-2-butanol, 2-Amino-2-methylpropanol, 2-Amino-2-methyl-propandiol, 2-Amino-2-hydroxymethylpropandiol, 5-Diethylamino-2-pentanon, 3-Methylaminopropionsäurenitril, 6-Aminohexansäure, 11-Aminoundecansäure, 6-Aminohexansäureethylester, 11-Aminohexansäureisopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diaminodicyclohexylmethan, Diamino-dimethyl-dicyclohexylmethan, Phenylendiamin, Xylylendiamin, Diaminobiphenyl, Naphthalindiamine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind symmetrisch oder asymmetrisch substituierten Anilin- und Toluidin-Derivate und N,N-Bis(hydroxy)alkylarylamine, wie N,N,-Dimethylanilin, N,N-Diethylanilin, N,N-Dimethyl-p-toluidin, N,N-Bis(hydroxyalkyl)arylamine, N,N-Bis(2-hydroxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin, N-Methyl-N-hydroxyethyl-p-toluidin, N-Ethyl-N-hydroxyethyl-p-toluidin sowie die analogen o- oder m-Toluidine und 4,4'-Bis(dimethylamino)diphenylmethan und/oder die Leucoformen der Farbstoffe Kristallviolett oder Malachitgrün.

Polymere Amine, wie solche die durch Polykondensation von N,N-Bis(hydroxyalkyl)anilin mit Dicarbonsäuren oder durch Polyaddition von Ethylenoxid und diese Amine erhalten werden, sind ebenso als Beschleuniger geeignet.

Der Beschleuniger kann in einer Menge von 0,01 bis 10 Gew.-%, bevorzugt 0,5 bis 5 Gew.-%, besonders bevorzugt 0,5 bis 3 Gew.-%, bezogen auf die Harzkomponente, in dem Reaktionsharzsystem enthalten sein.

In einer weiteren Ausführungsform enthält die Harzkomponente des Weiteren einen Inhibitor für die Lagerstabilität der Harzkomponente. Der Inhibitor kann allein oder zusammen mit dem Beschleuniger in der Harzkomponente enthalten sein.

Als Inhibitoren sind die für radikalisch polymerisierbare Verbindungen üblicherweise verwendeten Inhibitoren geeignet, wie sie dem Fachmann bekannt sind. Bevorzugt sind die Inhibitoren unter phenolischen Verbindungen und nicht-phenolischen Verbindungen, wie stabilen Radikalen und/oder Phenothiazinen, ausgewählt.

Als phenolische Inhibitoren sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Brenzkatechin und Butylbrenzkatechine, wie 4-tert-Butylbrenzkatechin, 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, geeignet.

Als nicht-phenolische oder anaerobe, d.h. im Gegensatz zu den phenolischen Inhibitoren auch ohne Sauerstoff wirksame Inhibitoren kommen vorzugsweise Phenothiazine, wie Phenothiazin und/oder Derivate oder Kombinationen davon, oder stabile organische Radikale, wie Galvinoxyl- und N-oxyl-Radikale in Betracht.

Als N-Oxyl-Radikale können beispielsweise solche verwendet werden, wie sie in der DE 199 56 509 beschrieben sind. Geeignete stabile N-Oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-Oxyl Verbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen.

Diese Verbindungen sind besonders deshalb sinnvoll und meist erforderlich, da sonst die anzustrebende Lagerstabilität von vorzugsweise mehr als 3 Monaten, insbesondere 6 Monaten oder mehr, nicht erreicht werden kann. Die UV- und insbesondere die Lagerstabilität können so beträchtlich erhöht werden.

Ferner können in para-Stellung zur Hydroxylgruppe substituierte Pyrimidinol- oder Pyridinol-Verbindungen, wie sie in der Patentschrift DE 10 2011 077 248 B1 beschrieben sind, als Inhibitoren eingesetzt werden.

Bevorzugte Inhibitoren sind 1-Oxyl-2,2,6,6-tetramethylpiperidin (TEMPO) und 1-Oxyl-2,2,6,6-tetramethylpiperidin-4-ol (TEMPOL), Katechole, besonders bevorzugt tert-ButylBrenzkatechin und Brenzkatechin, BHT und Phenothiazin.

Die Inhibitoren können, abhängig von den gewünschten Eigenschaften des Reaktionsharzsystems, entweder allein oder als Kombination von zweien oder mehreren davon verwendet werden.

Der Inhibitor kann in einer Menge von 0,001 bis 5 Gew.-%, bevorzugt 0,01 bis 3 Gew.-%, besonders bevorzugt 0,05 bis 1 Gew.-%, bezogen auf die Harzkomponente, in dem Reaktionsharzsystem enthalten sein. Sind mehrere Inhibitoren enthalten, so entspricht die eben genannte Menge der Gesamtmenge an Inhibitoren.

Gemäß einer Ausführungsform enthält die Harzkomponente anorganische Zusatzstoffe, wie Füllstoffe und/oder weitere Zusätze.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerde- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Teilchen haben vorzugsweise einen maximalen Durchmesser von 10 mm. Bevorzugt und deutlicher verstärkend wirken sich jedoch die globulären, inerten Stoffe (Kugelform) aus.

Füllstoffe liegen in der Harzkomponente vorzugsweise in einer Menge von 20 bis zu 90, insbesondere 40 bis 80, vor allem 50 bis 80 Gew.-% vorhanden.

Weitere denkbare Zusätze sind ferner Rheologieadditive, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Ferner können Mittel zur Regulierung des pH-Wertes, wie anorganische und/oder organische Säuren gemäß DE102010008971A1, insbesondere Copolymere mit sauren Gruppen, z.B. Estern der Phosphorsäure, eingesetzt werden. Auch nicht reaktive Verdünnungsmittel (Lösungsmittel) können, vorzugsweise in einer Menge bis zu 30 Gew.-%, bezogen auf die jeweilige Komponente (Reaktionsharzmörtel, Härter), beispielsweise von 1 bis 20 Gew.-%, vorliegen, wie Niederalkylketone, z.B. Aceton, Diniederalkylniederalkanoylamide, wie Dimethylacetamid, Niederalkylbenzole, wie Xylole oder Toluol, Phthalsäureester oder Paraffine, oder Wasser. Darüber hinaus können auch Mittel zur Verbesserung der Verträglichkeit zwischen Harz- und Härterkomponente, wie ionische, nichtionische oder amphotere Tenside; Seifen, Netzmittel, Detergenzien; Polyalkylenglykolether; Salze von Fettsäuren, Mono- oder Diglyceride von Fettsäuren, Zuckerglyceride, Lecithin; Alkansulfonate, Alkylbenzolsulfonate, Fettalkoholsulfate, Fettalkoholpolyglykolether, Fettalkoholethersulfate, sulfonierte Fettsäuremethylester; Fettalkoholcarboxylate; Alkylpolyglycoside, Sorbitanester, N-Methylglucamide, Saccharoseester; Alkylphenole, Alkylphenolpolyglykolether, Alkylphenolcarboxylate; quartäre Ammoniumverbindungen, Esterquats, Carboxylate quartärer Ammoniumverbindungen, verwendet werden.

Zweckmäßig wird die Härtung der Harzkomponente mit einem Peroxid als Härtungsmittel initiiert. Neben dem Peroxid kann zusätzlich ein Beschleuniger verwendet werden. Alle dem Fachmann bekannten Peroxide, die zum Härten von Methacrylatharzen verwendet werden, können eingesetzt werden. Derartige Peroxide umfassen organische und anorganische Peroxide, entweder flüssig oder fest, wobei Wasserstoffperoxid auch verwendet werden kann. Beispiele geeigneter Peroxide sind Peroxycarbonate (der Formel -OC(O)OO-), Peroxyester (der Formel -C(O)OO-), Diacylperoxide (der Formel -C(O)OOC(O)-), Dialkylperoxide (der Formel -OO-) und dergleichen. Diese können als Oligomer oder Polymer vorliegen. Eine umfassende Reihe an Beispielen für geeignete Peroxide ist zum Beispiel in der Anmeldung US 2002/0091214 A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie tert-Butylperester (z.B. tert-Butylperoxybenzoat), Benzoylperoxid, Peracetate und Perbenzoate, Lauroylperoxid, einschließlich (Di)peroxyester, Perether, wie Peroxydiethylether, Perketone, wie Methylethylketoneperoxid. Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-acyl- oder -OOH-Gruppe gebunden sind. Aber auch Gemische dieser Peroxide mit anderen Peroxiden können eingesetzt werden. Die Peroxide können auch gemischte Peroxide sein, d.h. Peroxide, die zwei verschiedene Peroxid-tragende Einheiten in einem Molekül aufweisen. Bevorzugt wird zum Härten Benzoylperoxid (BPO) oder tert-Butylperoxybenzoat verwendet.

Als anorganische Peroxide können insbesondere Persulfate, Perborate und/oder Perphosphate, wie Ammoniumpersulfat, Kalium- und Natriummonopersulfate oder Kalium- und Natriumdipersulfate, verwendet werden. Aber auch Wasserstoffperoxid kann verwendet werden.

Auch die Verwendung von organisch substituierten Ammoniumpersulfaten (beispielsweise N'N'N'N'-Tetrabutylammonium- oder N'N'N'-Tricapryl-N'-methylammoniumpersulfat ist möglich.

Neben dem Peroxid enthält erfindungsgemäß die Härterkomponente noch ein Phlegmatisierungsmittel um das Peroxid zu stabilisieren. Entsprechende Phlegmatisierungsmittel sind aus der DE 3226602 A1, EP 0432087 A1 und EP 1 371 671 A1 bekannt.

Die Härterkomponente enthält bevorzugt Wasser als Phlegmatisierungsmittel. Neben dem Wasser kann die Härterkomponente noch weitere Phlegmatisierungsmittel enthalten, wobei Wasser als alleiniges Phlegmatisierungsmittel bevorzugt ist, um keine Verbindungen einzubringen, die eine weichmachende Wirkung haben.

Das Peroxid kann in einer Menge von 0,25 bis 35 Gew.-%, bevorzugt 1 bis 30 Gew.-%, besonders bevorzugt 5 bis 25 Gew.-%, bezogen auf die Härterzusammensetzung, in den Reaktionsharzsystem enthalten sein.

Bevorzugt enthält die Härter-Komponente ferner anorganische Zusatzstoffe, wie Füllstoffe und/oder weitere Zusätze, wie sie der Harz-Komponente zugegeben werden können.

Bevorzugt kommt die erfindungsgemäße Verwendung einer Reaktionsharzmischung mit einer vordefinierten Polarität bei Mehrkomponenten-Reaktionsharzsystemen, insbesondere Zweikomponenten-Reaktionsharzsystemen, zum Einsatz, in denen die Harzkomponente und die Härterkomponente reaktionsinhibierend getrennt in unterschiedlichen Behältern vorliegen, beispielsweise einer Mehrkammer-Vorrichtung, wie eine Mehrkammer-Patrone und/oder -Kartusche, aus welchen Behältern die beiden Komponenten durch Einwirkung mechanischer Presskräfte oder unter Einwirkung eines Gasdruckes ausgepresst und vermischt werden. Eine weitere Möglichkeit besteht darin das Zweikomponenten-Reaktionsharzsystem als Zweikomponenten-Kapseln zu konfektionieren, die in das Bohrloch eingeführt werden und durch schlagdrehendes Setzen des Befestigungselements zerstört werden unter gleichzeitiger Durchmischung der beiden Komponenten der Mörtelmasse. Vorzugsweise wendet man ein Patronensystem oder ein Injektionssystem an, bei dem die beiden Komponenten aus den getrennten Behältern ausgepresst und durch einen statischen Mischer geführt werden, in dem sie homogen vermischt und dann über eine Düse vorzugsweise direkt in das Bohrloch ausgetragen werden.

Das Zweikomponenten-Reaktionsharzsystem findet vor allem im Baubereich Verwendung, etwa zur Instandsetzung von Beton, als Polymerbeton, als Beschichtungsmasse auf Kunstharzbasis oder als kalthärtende Straßenmarkierung. Besonders eigenen sie sich zur chemischen Befestigung von Verankerungselementen, wie Ankern, Bewehrungseisen, Schrauben und dergleichen, in Bohrlöchern, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein und dergleichen.
Ein weiterer Gegenstand der vorliegenden Erfindung ist die Verwendung eines Reaktionsharzes in Kombination mit einem oder mehreren Reaktivverdünnern zur Einstellung einer vordefinierten Polarität einer Reaktionsharzmischung. Hinsichtlich des Reaktionsharzes, der Reaktivverdünner und der Reaktionsharzmischung gelten die vorstehenden Ausführungen.

Ein weiterer Gegenstand der vorliegenden Erfindung ist eine Reaktionsharzmischung mit einer vordefinierten Polarität zur Verwendung in einer Harzkomponenten auf Basis von radikalisch polymerisierbaren Verbindungen eines Mehrkomponenten-Reaktionsharzsystems, insbesondere eines Zweikomponenten-Reaktionsharzsystems für die chemische Befestigung von Konstruktionselementen.

Ein Gegenstand der vorliegenden Erfindung ist auch ein Verfahren zur Einstellung der Gelzeit einer Mörtelmasse auf Basis von radikalisch polymerisierbaren Verbindungen, wobei in einem ersten Schritt zunächst ein Reaktionsharz bereitgestellt wird. Dieses Reaktionsharz wird in einem zweiten Schritt mit einem oder mehreren Reaktivverdünnern gemischt, um damit eine Reaktionsharzmischung mit einer vordefinierten Polarität herzustellen. Hinsichtlich des Reaktionsharzes, der Reaktivverdünner und der Reaktionsharzmischung gelten die vorstehenden Ausführungen.

Die folgenden Beispiele dienen der weiteren Erläuterung der Erfindung.

### AUSFÜHRUNGSBEISPIELE

Die Harzkomponenten Unpolar 1 bis 3 und Polar 1 bis 4 wurden durch Vermischen der in den Tabellen 1 und 2 genannten Bestandteilen hergestellt.

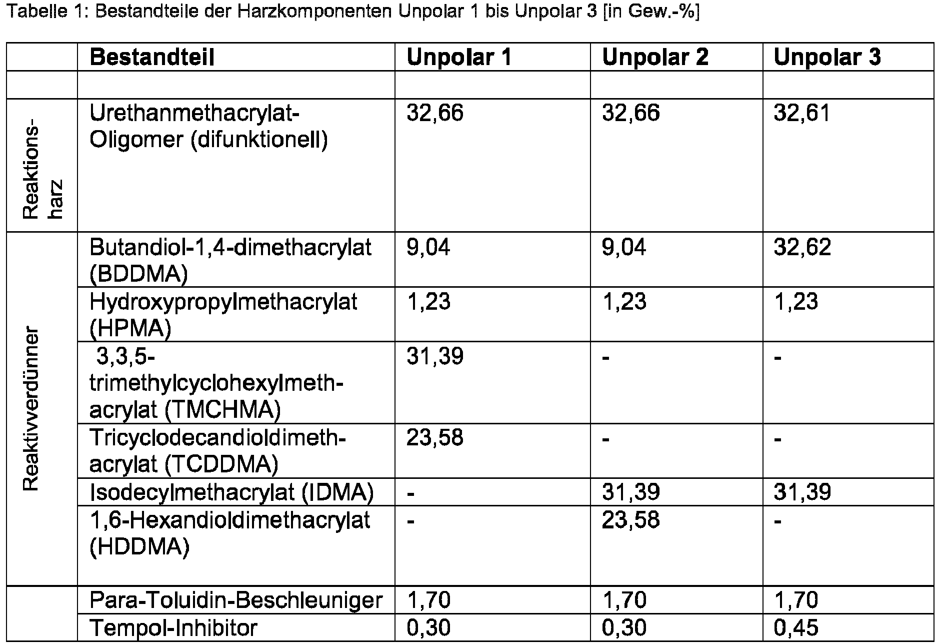

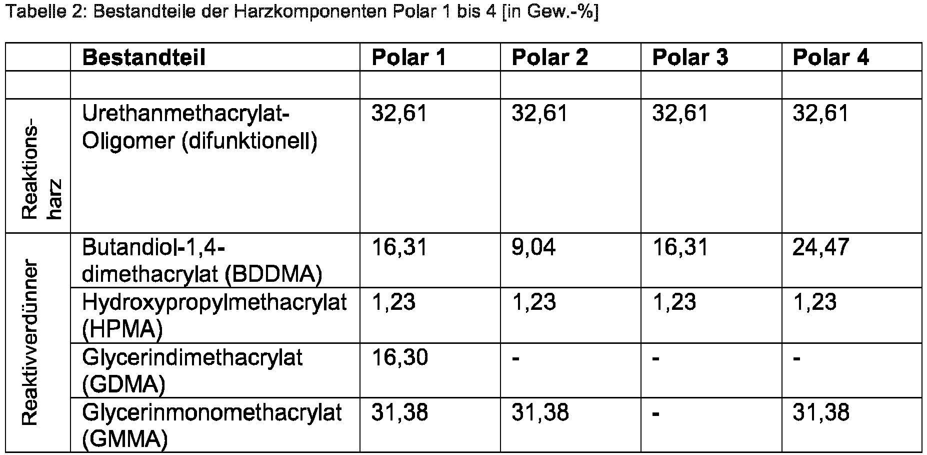

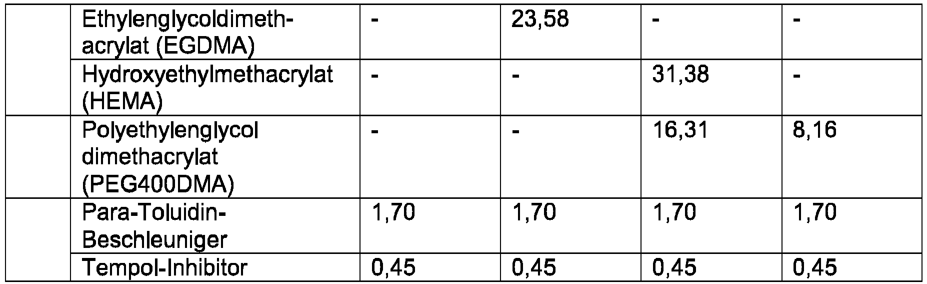

### Bestimmung der Harz-Polarität

Als Maß für die Polarität des jeweiligen Reaktionsharzmischung wurde der polare Anteil der Oberflächenspannung genommen, welcher mit Hilfe einer Kontaktwinkelmessung (Tropfenkonturanalyse-system G10/DSA10 von Fa. KRÜSS) an einer unpolaren Referenzoberfläche (Teflon) bestimmt wurde. Die Ergebnisse der Polaritätsmessung sind in Tabelle 3 dargestellt.

### Bestimmung der Gelzeit:

Die Harzkomponenten Unpolar 1 bis 3 und Polar 1 bis 4 wurden mit einer Härterkomponente umfassend eine 20%ige Dibenzoylperoxid Suspension kombiniert. Es wurden jeweils 38,5g Harzkomponente (A) und 11,5g Härterkomponente (B) in einem Mehrweg-Plastikbecher eingewogen und dann für 20 Sekunden kräftig geschüttelt. Ein Teströhrchen wurde bis zur Markierung mit dieser Mischung befüllt (ca. 20g), wobei das Teströhrchen bei einer Temperatur von 25°C gehalten wurde. Die Gelzeit wurde einem herkömmlichen Messgerät (Geltimer) bei einer Temperatur von 25 °C bestimmt. Dazu wurde ein Temperaturfüller (PT100) in das Teströhrchen eingebracht. Die Aushärtung wurde online über die Temperaturmessung aufgezeichnet. Die Gelzeit entspricht der Wendepunkt der Steigung in der Temperatur-Zeit Kurve. Die Ergebnisse der Gelzeitmessung sind in Tabelle 3 zusammengefasst und die entsprechenden Temperatur -Zeit Kurven sind in Figur 1 dargestellt. Diese zeigen, dass die Polarität der Reaktionsharzmischung einen großen Einfluss auf die Gelzeit der Mörtelmasse hat und dass sich mit zunehmender Polarität die Gelzeit verkürzt.

**Tabelle 3: Ergebniss der Messung der Polarität der Reaktionsharzmischung und der Gelzeit**

| | **Polarität [mN/m]** | **Gelzeit [min]** | **Tmax [°C]** |
|---|---|---|---|
| Unpolar 1 | 0,4 | 15 | 104 |
| Unpolar 2 | 0,6 | 12,1 | 108 |
| Unpolar 3 | 4,2 | 9,9 | 104 |
| Polar 1 | 9,8 | 2,8 | 97 |
| Polar 2 | 10,1 | 4,2 | 88 |
| Polar 3 | 13,3 | 3,7 | 99 |
| Polar 4 | 13,4 | 4,5 | 85 |

Die Ergebnisse aus Tabelle 3 zeigen die Abhängigkeit der Gelzeit einer Mörtelmasse von der Polarität der Reaktionsharzmischung. Die Einstellung einer vordefinierten Polarität der Reaktionsharzmischung durch Mischung eines Reaktionsharzes mit einem oder mehreren Reaktivverdünnern.

## Patentansprüche

1. Verwendung einer Reaktionsharzmischung mit einer vordefinierten Polarität zur Einstellung der Gelzeit einer Mörtelmasse auf Basis von radikalisch polymerisierbaren Verbindungen, insbesondere auf Basis von Urethan(meth)acrylaten.

2. Verwendung gemäß Anspruch 1, wobei die vordefinierte Polarität der Reaktionsharzmischung durch Mischen eines Reaktionsharzes umfassend mindestens eine radikalisch polymerisierbare Verbindung mit einem oder mehreren Reaktivverdünnern eingestellt wird.

3. Verwendung gemäß Anspruch 1 oder 2, wobei die Gelzeit der Mörtelmasse auf Basis von radikalisch polymerisierbaren Verbindungen in einem Bereich von 2 bis 10 Minuten liegt.

4. Verwendung gemäß einem der vorhergehenden Ansprüche, wobei die Mörtelmasse auf Basis von radikalisch polymerisierbaren Verbindungen ein Mehrkomponenten-Reaktionsharzsystem, insbesondere ein Zweikomponenten-Reaktionsharzsystem, ist.

5. Verwendung gemäß einem der vorhergehenden Ansprüche, wobei die Reaktionsharzmischung eine Polarität < 7 mN/m aufweist.

6. Verwendung gemäß Anspruch 5, wobei die Gelzeit der Mörtelmasse auf Basis von radikalisch polymerisierbaren Verbindungen in einem Bereich von 9 bis 20 Minuten liegt.

7. Verwendung gemäß einem der Ansprüche 1 bis 4, wobei die Reaktionsharzmischung eine Polarität ≥ 7mN/m aufweist.

8. Verwendung gemäß Anspruch 7, wobei die Gelzeit der Mörtelmasse auf Basis von radikalisch polymerisierbaren Verbindungen in einem Bereich von 2 bis 8 Minuten liegt.

9. Verwendung einer Harzmischung umfassend mindestens eine radikalisch polymerisierbare Verbindung in Kombination mit einem oder mehreren Reaktivverdünnern zur Einstellung einer vordefinierten Polarität einer Reaktionsharzmischung.

10. Reaktionsharzmischung mit einer vordefinierten Polarität zur Verwendung in einer Mörtelmasse auf Basis von radikalisch polymerisierbaren Verbindungen für die chemische Befestigung von Konstruktionselementen.

11. Mörtelmasse auf Basis von radikalisch polymerisierbaren Verbindungen umfassend eine Reaktionsharzmischung mit einer vordefinierten Polarität.

12. Verfahren zur Einstellung der Gelzeit einer Mörtelmasse auf Basis von radikalisch polymerisierbaren Verbindungen umfassend
a) Bereitstellen eines Reaktionsharzes umfassend mindestens eine radikalisch polymerisierbare Verbindung,
b) Bereitstellen eines oder mehrerer Reaktivverdünner in Abhängigkeit von der Polarität des Reaktionsharzes und der einzustellende Gelzeit und
c) Mischen des Reaktionsharzes mit einem oder mehreren Reaktivverdünnern zum Erhalt einer Reaktionsharzmischung mit einer vordefinierten Polarität.
